# EUROPÄISCHE PATENTSCHRIFT

(11) **EP 0 560 050 B1**
(45) Veröffentlichungstag und Bekanntmachung des Hinweises auf die Patenterteilung: **11.12.1996**
(21) Anmeldenummer: 93101771.9
(22) Anmeldetag: 05.02.1993
(51) Int. Cl.: H01B 7/02, H01B 13/00

(54) **Verwendung eines Energiekabels mit profilierter Isolierung als Batteriekabel in Kraftfahrzeugen**
Use of an electrical power cable with corrugated insulation as battery cable in Automobiles
Utilisation d'un câble électrique de puissance à isolation ondulé comme câble de batterie dans des voitures

(30) Priorität: 13.03.1992 DE 9203386 U
(43) Veröffentlichungstag der Anmeldung: 15.09.1993
(73) Patentinhaber: AUTO-KABEL HAUSEN GmbH & CO. BETRIEBS-KG, D-79688 Hausen (DE)
(72) Erfinder: Nölle, Günther, W-7850 Lörrach-Hauingen (DE); Griesenbach, Dieter F., W-7862 Hausen i.w. (DE)
(74) Vertreter: Patent- und Rechtsanwaltssozietät, Schmitt, Maucher & Börjes

(56) Entgegenhaltungen:
- DE-A- 2 261 530
- FR-A- 1 277 377
- FR-A- 2 315 153
- FR-A- 2 437 052

## Beschreibung

Die Erfindung betrifft die Verwendung eines elektrischen Energiekabels, dessen elektrisch leitende Seele zwischenraumfrei und lückenlos von einer äußeren Isolierschicht aus in sich homogenem, thermoplastischem Werkstoff ummantelt ist, die eine rechtwinklig zur Längserstreckung des Energiekabels orientierte Profilierung aufweist, welche entlang außenliegenden Mantellinien des Energiekabels durch wechselnde Erhebungen und Vertiefungen gebildet ist.

Aus der FR-A-2 437 052 ist ein insbesondere als Unterwasserkabel einsetzbares Kabel mit hohem Reibungskoeffizient bekannt, welches eine elektrisch leitende Seele und zwischenraum- und lückenlos darauf eine äußere Isolierschicht hat, die eine quer zu seiner Längserstreckung orientierte Profilierung aufweist, welche entlang außenliegenden Mantellinien des Kabels durch wechselnde Erhebungen und Vertiefungen gebildet ist. Diese Isolierschicht kann beispielsweise durch Extrusion auf die Seele aufgebracht sein. Die wende- oder schraubenförmigen Nuten zur Profilierung an der Außenseite dienen dazu, die Reibung an der Außenseite des Kabels zu vergrößern, damit es unter Wasser verlegt und bei diesem Verlegevorgang abgebremst werden kann.

Aus der FR-A-2 315 153 und aus DE-A-22 61 530 sind Energiekabel bekannt, bei denen unmittelbar auf die metallische Seele oder auf eine außenseitig glatte Isolierung ein Wellrohr aufgeschoben oder aufgezogen ist. Dieses zur Isolierung oder zum Schutz dienende Wellrohr hat dabei gegenüber dem elektrischen Leiter oder der glatten Isolierung einen Zwischenraum mindestens dort, wo die Wellen des Wellrohres radial nach außen geformt sind.

Für Hochspannungsleiter ist ein vergleichbarer Aufbau aus EP 0 337 949 A2 bekannt.

Mit dem Aufschieben eines Wellrohres ist jedoch ein erheblicher Arbeits- und Zeitaufwand verbunden.

Wenn ein Energiekabel dieser Art in der Kraftfahrzeugtechnik beispielsweise zur Übertragung des Batteriestromes zu den in einem Automobil enthaltenen elektrischen Verbrauchern verwendet werden soll, muß eine ausreichend große Karosserieöffnung zum Durchführen des Energiekabels vorgesehen werden, weil das Wellrohr einen im Vergleich zum Außendurchmesser des Kabels wesentlich größeren Durchmesser aufweisen muß. Da die Starterbatterie bei verschiedenen Fahrzeugtypen nicht im Motorraum, sondern im Kofferraum angeordnet sind, sind zur Überbrückung teilweise auch vergleichsweise lange Stromleitungen vorzusehen.

Zur Isolierung dieser Stromleitungen sind deren elektrisch leitende Seelen bei einer derartigen Verwendung von einer Isolierung ummantelt, die außenseitig glatt ist.

Um die außenseitig glatte und in ihrem Querschnitt runde Isolierung vor den insbesondere bei einem Unfall auftretenden Kerb- und Scherkräften zu schützen und um einen eventuell auch zu weiteren Schäden führenden Kurzschluß verhindern zu können, wird über solche vorbekannte Energiekabel ebenfalls ein eventuell auch kürzeres Wellrohr gemäß den vorerwähnten Druckschriften gezogen, das außenseitig eine wellenförmige Profilierung aufweist.

Insbesondere bei engen und durch weitere elektronische Zuleitungen noch zusätzlich eingeengten Raumverhältnissen kann das Durchführen einer in ihrem Durchmesser derart großen Stromleitung durch die Fahrzeugkarosserie zu nicht unerheblichen Schwierigkeiten führen.

Es besteht deshalb die Aufgabe, eine elektrisches Energiekabel der eingangs erwähnten Art so zu gestalten, daß der Vorteil eines geringen Herstellungsaufwandes mit dem Vorteil eines vergleichsweise kleinen Außendurchmessers bei ausreichendem Schutz gegen die auf das Energiekabel eventuell einwirkenden Kerb- und Scherkräfte im Falle eines Fahrzeugunfalles verbunden werden können.

Die Losung der Aufgabe ist im Anspruch 1 angegeben.

Die Lösung dieser Aufgabe besteht in der Verwendung eines eingangs erwähnten elektrischen Energiekabels als hohen Stromstärken standhaltendes Batteriekabel in Kraftfahrzeugen zur Übertragung des Batteriestromes zu den in dem Kraftfahrzeug enthaltenen elektrischen Verbrauchern, wobei die in axialer Richtung liegende Breite der Vertiefungen etwa dem ein- bis zweifachen der Breite der Erhebungen entspricht.

Da auf ein zusätzliches Wellrohr oder eine sonstige profilierte Zusatzschicht verzichtet werden kann, ist das Energiekabel mit seinem im Vergleich zu einem zusätzlichen Wellrohr relativ geringen Durchmesser auch unter beengten Verhältnissen gut zu verlegen. Die äußere Isolierschicht bildet dabei eine in sich homogene, profilkörperfreie Schicht aus thermoplastischem Werkstoff, in die außenseitig die quer zur Längserstreckung orientierte Profilierung eingeformt ist, welche einen guten Schutz für den elektrischen Leiter beziehungsweise die leitende Seele gegen eventuelle Kerb- und Scherkräfte bietet, ohne daß das zusätzliche Wellrohr notwendig wäre.

Für die erfindungsgemäße Verwendung ist es zweckmäßig, wenn die Erhebungen und die Vertiefungen jeweils etwa ringförmig an der Außenseite des Energiekabels umlaufend angeordnet sind. Dies bietet einen besonders guten Schutz gegen unbeabsichtigte Einschneidungen in die Isolierung. Außerdem kann das Energiekabel dazu auch gegen axiale Verschiebungen und Bewegungen fixiert werden, weil ein entsprechendes Halteelement formschlüssig beispielsweise in eine Vertiefung eingreifen kann. Dies ist durch die ringförmige Anordnung besonders begünstigt.

Ein besonders günstiger Kompromiß für einen guten Schutz der leitenden Seele durch die Profilierung der Isolierschicht einerseits und eine weiterhin gute Isolierung andererseits kann bei der erfindungsgemäßen Verwendung darin bestehen, daß die Breite der Vertiefungen etwa dem Eineinhalbfachen der Breite der Erhebungen entspricht. Gleichzeitig ergibt sich dadurch zwischen den Erhebungen ausreichend Platz zur Unterbringung von den elektrischen Leiter umfassenden Halteelementen, die eine Festlegung sowohl in Querrichtung als aber aufgrund den Eingriffen zwischen den Erhebungen auch in axialer Richtung bewirken können.

Günstig ist dabei, wenn die Erhebungen und die Vertiefungen in Längsrichtung der Mantellinien eine wellenförmige Profilierung mit vorzugsweise gleichmäßigen Abständen bilden. Da die Abstände nicht all zu groß sind, werden die Bereiche der Vertiefungen gut abgeschirmt, was bei zu großen Abständen zumindest gefährdet wäre.

Eine zweckmäßige Ausgestaltung des Energiekabels für seine Verwendung kann darin bestehen, daß die Erhebungen jeweils von der tiefsten Stelle aus bis zu ihrer größten Höhe und wieder zurückverlaufend konvex gekrümmt und die Vertiefungen an der tiefsten Stelle in axialer Richtung eben ausgebildet sind. Selbst an den tiefsten Stellen wird dadurch die Isolierung nicht zu dünn, selbst wenn die Gesamtdicke auf der Außenseite der Erhebungen beschränkt wäre. Zwar könnten auch die Vertiefungen - in diesem Falle hinsichtlich ihres Querschnittes konkav - gekrümmt sein, jedoch würde dies an der tiefsten Stelle dann eine stärkere Einschränkung der Isolierdicke bedeuten.

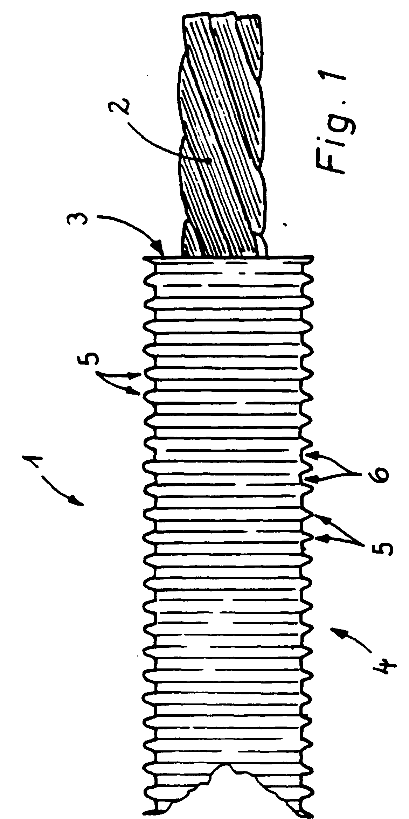

Nachstehend ist ein Ausführungsbeispiel des erfindungsgemäß verwendbaren Energiekabels anhand der Zeichnung näher beschrieben. Dabei zeigt
die einzige Figur ein isoliertes Energiekabel in Seitenansicht, dessen elektrisch leitende Seele, beispielsweise ein Bündel von Litzen oder Einzeldrähten, von einer profilierten Isolierschicht ummantelt ist, wobei die Profilierung durch ringförmige, quer zur Längserstreckung des Energiekabels orientierte, sich abwechselnde außenseitige Erhebungen und Vertiefungen gebildet ist.

Die Figur zeigt ein elektrisches Energiekabel 1 in einer Seitenansicht, das zur Verwendung in Kraftfahrzeugen als ein auch hohen Stromstärken standhaltendes Batteriekabel vorgesehen ist. Das Energiekabel 1 hat eine elektrisch leitende Seele 2, die als vieldrähtiger und dementsprechend flexibler Kupferleiter ausgebildet ist. Die Seele 2 des Energiekabels 1 wird von einer äußeren Isolierschicht 3 ummantelt, die eine in sich homogene, profilkörperfreie und ausschließlich aus thermoplastischen Werkstoffen bestehende Außenschicht bildet. Die Isolierschicht 3 kann beispielsweise aus Polyvinylchlorid, Polyurethan, Polyethylen, Styrol-Ethylen-Butylen-Kautschuk oder anderen Thermoplasten bestehen.

Wie die Figur zeigt, ist in die Isolierschicht 3 des Energiekabels 1 außenseitig eine quer zur Längserstreckung des Energiekabels 1 orientierte Profilierung 4 eingeformt, die aus ringförmigen, etwa rechtwinklig zur Längserstreckung des Energiekabels 1 angeordneten und sich in gleichmäßigen Abständen abwechselnden Erhebungen 5 und Vertiefungen 6 der Isolierschicht 3 gebildet ist. Die Erhebungen 5 und Vertiefungen 6 der Isolierschicht 3 geben dem Energiekabel 1 in Längsrichtung eine wellenförmige Kontur mit Wellenbergen und Wellentälern.

Dabei ist die Dicke der äußeren Isolierschicht 3 so bemessen, daß auch zwischen einem Wellental 6 der Profilierung 4 und der im Inneren des Energiekabels 1 befindlichen Leiter-Seele 2 ein ausreichender, die Seele 2 ummantelnder Isolierschicht-Bereich verbleibt. Das Energiekabel 1 wird praktisch endlos in einer Vorrichtung hergestellt, in der die Isolierschicht 3 aus thermoplastischem Material mit Hilfe eines Extruders zwischenraumfrei und lückenlos auf die elektrisch leitende Seele 2 extrudiert wird. Dem Extruder einer hier nicht näher dargestellten Vorrichtung ist austrittsseitig eine Profiliereinrichtung unmittelbar nachgeschaltet, die die äußere Isolierschicht 3 noch in dem teigigen verformbaren Zustand ihres thermoplastischen Materials mit Profilwerkzeugen druckbeaufschlagt. Diese Profilwerkzeuge können beispielsweise Profilierwalzen oder aber Panzer- oder Profilierketten sein, welche um quer und vorzugsweise rechtwinklig zur Längsachse des Energiekabels 1 angeordnete Drehachsen rotieren.

Die etwa ringförmig an der Außenseite umlaufend angeordneten Erhebungen 5 und Vertiefungen 6 haben dabei gemäß der Figur jeweils etwa die gleiche Breite. Günstig kann es jedoch auch sein, wenn die Breite der Vertiefungen 6 etwa dem Eineinhalbfachen oder Zweifachen der Breite der Erhebungen 5 entspricht.

Ferner erkennt man, daß die Erhebungen 5 jeweils von ihrer tiefsten Stelle aus bis zu ihrer größten radialen Höhe und wieder zurückverlaufend konvex gekrümmt sind, wobei der Krümmungsradius an ihrer äußersten Ausdehnung am kleinsten ist. Die Vertiefungen 6 hingegen sind an ihren tiefsten Stellen in Axialrichtung verlaufend eben ausgebildet. Zwar könnten auch die Vertiefungen konkav gerundet sein, jedoch würde dann im Bereich der Vertiefungen die radiale Dicke der Isolierschicht 3 noch mehr vermindert. Es kann also durch diese Ausgestaltung vor allem der Vertiefungen 6 erreicht werden, daß in diesem Bereich die Isolierung nicht zu dünn wird, bei dennoch beschränkter äußerer Gesamtdicke.

Die Isolierung kann einlagig ausgebildet sein und allein aus der homogenen äußeren Isolierschicht 3 bestehen. Um besonderen Sicherheitsanforderungen, beispielsweise bei Tankfahrzeugen oder militärischen Fahrzeugen genügen zu können, kann diese Isolierung der Energiekabel 1 aber auch mehrlagig ausgebildet werden, wobei hierzu unterhalb der äußeren Isolierschicht 3 beispielsweise eine Baumwoll-Zwischenlage und/oder zumindest eine weitere auf die Seele 2 gegebenenfalls extrudierte Kunststoff- oder Isolierschicht vorgesehen werden kann. Trotz der eventuell mehrlagigen Ausbildung ihrer Isolierung zeichnet sich das Energiekabel durch einen im Vergleich zu zusätzlich aufgeschobenen Wellrohren vergleichsweise geringen Durchmesser aus.

Das Kabel 1 ist mit geringem Aufwand kostengünstig herstellbar und bietet auch bei einem vergleichsweise kleinen Außendurchmesser einen ausreichenden Schutz gegen die bei seiner Verwendung unter Umständen einwirkenden Kerb- und Scherkräfte.

## Patentansprüche

1. Verwendung eines elektrischen Energiekabels (1), dessen elektrisch leitende Seele (2) zwischenraumfrei und lückenlos von einer äußeren Isolierschicht (3) aus in sich homogenem, thermoplastischem Werkstoff ummantelt ist, die eine rechtwinklig zur Längserstreckung des Energiekabels (1) orientierte Profilierung (4) aufweist, welche entlang außenliegenden Mantellinien des Energiekabels (1) durch wechselnde Erhebungen (5) und Vertiefungen (6) gebildet ist, **als** hohen Stromstärken standhaltendes Batteriekabel in Kraftfahrzeugen zur Übertragung des Batteriestromes zu den in dem Kraftfahrzeug enthaltenen elektrischen Verbrauchern, wobei die in axialer Richtung liegende Breite der Vertiefungen (6) etwa dem ein- bis zweifachen der Breite der Erhebungen (5) entspricht.

2. Verwendung des elektrischen Energiekabels nach Anspruch 1, wobei die Erhebungen (5) und die Vertiefungen (6) jeweils etwa ringförmig an der Außenseite des Energiekabels (1) umlaufend angeordnet sind.

3. Verwendung des elektrischen Energiekabels nach Anspruch 1 oder 2, wobei die Breite der Vertiefungen (6) etwa dem Eineinhalbfachen der Breite der Erhebungen (5) entspricht.

4. Verwendung des elektrischen Energiekabels nach einem der Ansprüche 1 bis 3, wobei die Erhebungen (5) und die Vertiefungen (6) in Längsrichtung der Mantellinien eine wellenförmige Profilierung mit vorzugsweise gleichmäßigen Abständen bilden.

5. Verwendung des elektrischen Energiekabels nach einem der Ansprüche 1 bis 4, wobei die Erhebungen (5) jeweils von der tiefsten Stelle aus bis zu ihrer größten Höhe und wieder zurück verlaufend konvex gekrümmt und die Vertiefungen (6) an der tiefsten Stelle in Axialrichtung eben ausgebildet sind.

## Claims

1. Use of an electrical power cable (1) whose electroconductive core (2) is sheathed without a gap and without interruption by an outer insulating layer (3) of inherently homogeneous, thermoplastic material, said insulating layer (3) having a contour (4) which is oriented at right angles to the longitudinal expanse of the power cable (1) and is formed along external surface lines of the power cable (1) by alternating projections (5) and depressions (6), **as** a battery cable withstanding high current intensities in motor vehicles for transferring the battery current to the current-using equipment included in the vehicle, the axial width of the depressions (6) corresponding approximately to once to twice the width of the projections (5).

2. Use of the electric power cable as claimed in claim 1, wherein the projections (5) and the depressions (6) are of substantially annular circumferential arrangement on the outside of the power cable (1).

3. Use of the electrical power cable as claimed in claim 1 or claim 2, wherein the width of the depressions (6) corresponds approximately to one and a half times the width of the projections (5).

4. Use of the electrical power cable as claimed in any on of claims 1 to 3, wherein the projections (5) and the depressions (6) in the longitudinal direction of the surface lines form a wavy contour, with preferably uniform spacing.

5. Use of the electrical power cable as claimed in any one of claims 1 to 4, wherein the projections (5) are each of convex curvature departing from their deepest point to their maximum height and back again, and at the deepest point the depressions (6) are designed to be plane in the axial direction.

## Revendications

1. Utilisation d'un câble (1) de transport d'énergie électrique, dont l'âme (2) électriquement conductrice est enrobée sans espaces intermédiaires ni lacunes d'une couche isolante extérieure (3) en matériau thermoplastique en soi homogène, qui présente un profilage (4) orienté perpendiculairement à l'étendue longitudinale du câble électrique (1), profilage qui est formé par une alternance de bossages (5) et de renfoncements (6) le long de génératrices extérieures du câble électrique (1),
**comme** câble de batterie résistant à de fortes intensités de courant dans des véhicules automobiles, pour transmettre le courant de la batterie à des utilisateurs électriques présents dans le véhicule automobile, la largeur, située en direction axiale, des renfoncements (6) correspondant environ à une à deux fois la largeur des bossages (5).

2. Utilisation du câble de transport d'énergie électrique selon la revendication 1, les bossages (5) et les renfoncements (6) étant respectivement disposés en entourant approximativement annulairement le côté extérieur du câble électrique (1).

3. Utilisation du câble de transport d'énergie électrique selon la revendication 1 ou 2, la largeur des renfoncements (6) correspondant environ à une fois et demie la largeur des bossages (5).

4. Utilisation du câble de transport d'énergie électrique selon une des revendications 1 à 3, les bossages (5) et les renfoncements (6) formant, dans la direction longitudinale des génératrices, un profilage en forme d'ondulations de préférence équidistantes.

5. Utilisation du câble de transport d'énergie électrique selon une des revendications 1 à 4, les bossages (5) présentant respectivement une courbure convexe s'étendant depuis le point le plus profond jusqu'à leur hauteur maximale puis en retour, et les renfoncements (6) étant réalisés, au point le plus profond, plats en direction axiale.
